# EUROPÄISCHE PATENTSCHRIFT

(11) **EP 1 624 317 B1**
(45) Veröffentlichungstag und Bekanntmachung des Hinweises auf die Patenterteilung: **18.08.2010**
(21) Anmeldenummer: 05105663.8
(22) Anmeldetag: 24.06.2005
(51) Int. Cl.: G01S 7/40, G01S 13/93, G01S 13/60, H01Q 19/06, H01Q 15/02, H01Q 1/32

(54) **Radarsensor für Kraftfahrzeuge mit einer auf die Strassenoberfläche gerichteten Antennennebenkeule**
Radar sensor for motor vehicles with antenna sidelobe pointing at the road surface
Détecteur radar pour véhicules motorisés avec un lobe secondaire dirigé vers la surface de la route

(30) Priorität: 05.08.2004 DE 102004037907
(43) Veröffentlichungstag der Anmeldung: 08.02.2006
(73) Patentinhaber: ROBERT BOSCH GMBH, 70442 Stuttgart (DE)
(72) Erfinder: Lehre, Klaus, 76316 Malsch (DE); Steffens, Wolf, 71083 Herrenberg (DE)

(56) Entgegenhaltungen:
- EP-A- 1 467 223
- DE-A1- 10 207 437
- US-A- 4 725 774
- US-A- 4 769 646
- US-A- 5 677 902
- US-A- 5 914 811

## Beschreibung

### Stand der Technik

Die Erfindung betrifft einen Radarsensor für Kraftfahrzeuge, mit einer Optik, die einen von einem Antennenelement erzeugten Radarstrahl in mehrere in unterschiedliche Richtungen abgestrahlte Teilstrahlen aufteilt.

Radarsensoren werden in Kraftfahrzeugen dazu eingesetzt, andere Fahrzeuge oder sonstige Hindernisse im Umfeld des eigenen Fahrzeugs zu orten und deren Abstände und Relativgeschwindigkeiten zu messen, so daß z. B. eine automatische Abstandsregelung ermöglicht wird (ACC; Adaptive Cruise Control).

Aus DE 102 07 437 ist ein Radarsensor für diesen Zweck bekannt, der mehrere nebeneinander angeordnete Antennenelemente aufweist die in Verbindung mit einer Optik in der Form einer plankonvexen Linse mehrere leicht divergierende Radarkeulen erzeugen. Durch die Verwendung mehrerer Radarkeulen, deren Radarechos von den Antennenelementen empfangen und getrennt ausgewertet werden können, wird ein gewisses Winkelauflösungsvermögen des Radarsensors erreicht. Weiterhin ist bei diesem bekannten Radarsensor die Linse auf einem Teil ihres Querschnitts zugleich als Prisma ausgebildet, durch das aus jedem von einem einzelnen Antennenelement erzeugten Radarstrahl nochmals ein Teilstrahl ausgekoppelt wird, der schräg abwärts auf die Fahrbahn gerichtet ist. Dieser Teilstrahl, der bereits in relativ kurzem Abstand vor dem Fahrzeug auf die Fahrbahnoberfläche trifft, wird an Fahrbahnunebenheiten reflektiert, und die so erhaltenen Radarechos können beispielsweise dazu benutzt werden, die Geschwindigkeit des Fahrzeugs über Grund unabhängig von den Signalen der Raddrehzahlsensoren zu messen. Durch Messung des Abstands des Auftreffpunktes dieses Teilstrahls auf die Fahrbahnoberfläche ist es auch möglich, die vertikale Justierung des Radarsensors zu überwachen. Da das Radarecho von der Fahrbahnoberfläche auch dann vorhanden ist, wenn sich keine Fahrzeuge im Ortungsbereich des Hauptstrahls des Radarsensors befinden, kann anhand des Ausbleibens dieser Radarechos auch eine Erblindung des Radarsensors erkannt werden, die z. B. durch Schnee oder Eis vor der Linse des Radarsensors verursacht werden kann.

Aus der DE 102 07 437 A1 ist ein Radarsensor für Kraftfahrzeuge, mit einer Sende- und Empfangseinrichtung bekannt, deren Richtcharakteristik mehrere Keulen aufweist, von denen mindestens eine parallel zur Fahrbahnoberfläche gerichtet ist und wobei mindestens eine andere Keule schräg auf die Fahrbahnoberfläche gerichtet ist.

Aus der US 5 9,14,811 ist ein polarisierender Strahlteiler bekannt, der eine periodische Abfolge polarisierender Vertiefungen oder Vertiefungen mit Stufenprofil and der Oberfläche eines doppelbrechenden Materials aufweist. Gemäß einer weiteren Ausgestaltung sind zwei Substrate vorgesehen, die jeweils eine Abfolge stufenförmiger Vertiefungen aufweisen und miteinander kombiniert werden um einen größeren Winkel zur Strahlaufweitung zu erreichen.

Aus der US 4,725,774 ist eine akusto-optische Vorrichtung bekannt, um das Spektrum eines Radarsignals auszuwerten. Hierzu wird ein optischer Strahl in zwei Teile gespalten, wobei der eine mit einer akustischen Oberflächenwelle eines Referenzsignals und der andere Teil mit einer akustischen Oberflächenwelle des zu untersuchenden Signals wechselwirkt. Beide Teilstrahlen werden wieder kombiniert und mittels einer Linse fouriertransformiert um anschließend mittels nebeneinander angeordneten Photodetektoren ausgewertet zu werden. Die Teilstrahlen wechselwirken mit den akustischen Oberflächenwellen indem wellenleitende Gitterstrukturen auf einem Substrat aufgebracht sind.

Aus der US 5,677,902 ist eine optische Vorrichtung bekannt, die eine optische Quelle mit einer wirksamen Apertur aufweist, um ein Strahlungsbündel für ein optisches Speichermedium zu erzeugen. Um einen größeren Lichtanteil entlang der optischen Achse zu erzielen wird der lichtstrahl mittels eines Gitters aufgeweitet, das Spektrum der nullten Beugungsordnung kann dieses Gitter unverändert passieren und wird von einer Sammellinse gebündelt und auf das optische Speichermedium gerichtet.

### Vorteile der Erfindung

Die Erfindung mit den in Anspruch 1 angegebenen Merkmalen schafft einen Radarsensor, bei dem sich die Geometrie der Teilstrahlen besser an die jeweiligen Anforderungen anpassen läßt.

Dies wird erfindungsgemäß dadurch erreicht, daß die Optik ein Beugungsgitter aufweist.

Bekanntlich erzeugt ein Beugungsgitter ein Beugungsmuster, das neben einem Hauptmaximum mindestens ein Nebenmaximum aufweist. Der vom Antennenelement erzeugte Radarstrahl wird so in eine Anzahl von Teilstrahlen aufgeteilt, die dem Hauptmaximum und den Nebenmaxima des Beugungsmusters entsprechen. Der Winkel zwischen dem Hauptmaximum und dem ersten Nebenmaximum ist von der Gitterkonstanten des Beugungsgitters abhängig. Durch ein Beugungsgitter mit einer hinreichend kleinen Gitterkonstanten läßt sich so auch bei dünnen Linsen, in die kaum ein Prisma mit einer ausreichenden Brechkraft integriert werden könnte, ein großer Winkel zwischen den Teilstrahlen erreichen.

Das Beugungsgitter kann als Transmissionsgitter einfach vor die Linse vorgesetzt oder in der planen Oberfläche der Linse ausgebildet werden und kann sich dabei über den gesamten Querschnitt der Linse erstrecken. Dies hat den Vorteil, daß die Linse für den abgelenkten, dem ersten Nebenmaximum entsprechenden Teilstrahl die gleiche numerische Apertur aufweist wie für den Hauptstrahl, so daß die Geometrie des abgelenkten Strahls nicht so stark durch Beugungseffekte der Linse verfälscht wird. Ein weiterer wesentlicher Vorteil, insbesondere für die Blindheitserkennung, besteht darin, daß auch der abgelenkte Strahl ebenso wie der Hauptstrahl von der gesamten Querschnittsfläche der Linse ausgeht. Ablagerungen von Schnee, Eis oder Matsch, die zu einer Erblindung des Sensors führen, haben somit auf den abgelenkten Teilstrahl, der zur Blindheitserkennung dient, die gleiche Wirkung wie auf den nicht abgelenkten Hauptstrahl.

Vorteilhafte Ausgestaltungen und Weiterbildungen der Erfindung ergeben sich aus den Unteransprüchen.

Durch geeignete Gestaltung des Beugungsgitters, beispielsweise als sogenanntes Blaze-Gitter, läßt sich ein asymmetrisches Beugungsmuster erreichen, bei dem alle Nebenmaxima bis auf das erste Nebenmaximum auf einer Seite des Hauptmaximums weitgehend unterdrückt sind, so daß der Strahl ähnlich wie bei einem Prisma in nur zwei Teilstrahlen aufgeteilt wird, nämlich einen nicht abgelenkten Hauptstrahl und einen abgelenkten Nebenstrahl. Der abgelenkte Strahl kann dann in gleicher Weise wie bei dem aus DE 102 07 437 bekannten Radarsensor schräg auf die Fahrbahnoberfläche gerichtet werden und zur Messung der Absolutgeschwindigkeit, zur Justagekontrolle und/oder zur Blindheitserkennung genutzt werden. Da jedoch für den mit Hilfe des Beugungsgitters abgelenkten Strahl die gesamte numerische Apertur der Linse zur Verfügung steht, läßt sich dieser Strahl besser bündeln.

Wahlweise kann das Beugungsgitter auch vertikal orientiert werden, so daß der Nebenstrahl zur Seite abgelenkt wird. In diesem Fall kann der Nebenstrahl z. B. zur frühzeitigen Erkennung von Einscherern oder zur Ortung von Objekten auf Nebenspuren oder am Fahrbahnrand dienen. Das Beugungsgitter läßt sich dann auch so gestalten, daß symmetrisch zum Hauptstrahl genau zwei Nebenstrahlen erzeugt werden, die den beiden ersten Beugungsmaxima entsprechen. Auf diese Weise wird im Nahbereich des Fahrzeugs eine Überwachung beider Nebenspuren bzw. der linken Nebenspur und des rechten Fahrbahnrandes ermöglicht. Durch Auswertung der Radarechos, die von den Nebenspuren beispielsweise an linken und rechten Leitplanken oder Leitplankenpfosten erzeugt werden, ist es auch möglich zu erkennen, auf welcher Fahrspur der Fahrbahn sich das eigene Fahrzeug befindet. Eine Unterscheidung zwischen Radarechos, die vom Hauptstrahl einerseits und von den Nebenstrahlen andererseits erzeugt werden, ist beispielsweise dadurch möglich, daß Objekte, die von den Nebenstrahlen erfaßt werden, bereits bei ihrer ersten Erfassung einen sehr geringen Abstand zum eigenen Fahrzeug aufweisen werden. Bei stehenden Objekten oder Objekten oder Objekten, die langsamer sind als das eigene Fahrzeug, ist eine Unterscheidung zwischen Echos vom linken und rechten Nebenstrahl bei winkelauflösenden Radarsensoren dadurch möglich, daß sich die Azimutwinkel der georteten Objekte gegensinnig ändern.

Gemäß einer Weiterbildung der Erfindung ist es auch möglich, die Gitterkonstante des Beugungsgitters dynamisch zu variieren oder zu modulieren. Dies kann beispielsweise dadurch geschehen, daß das Beugungsgitter mittels elektronisch steuerbaer Elemente, beispielsweise mittels piezoelektrischer Elemente oder mittels Photonenkristall-Technologie in einem geeigneten Substrat erzeugt wird, so daß sich die Gitterparameter elektronisch steuern lassen. Dies eröffnet auch die Möglichkeit, den Ortungswinkelbereich des Radarsensors zu vergrößern oder das Winkelauflösungsvermögen zu verbessern, indem das Umfeld durch periodische Änderung des Ablenkungswinkels der Nebenstrahlen "gescannt" wird.

### Zeichnung

Ausführungsbeispiele der Erfindung sind in den Zeichnungen dargestellt und in der nachfolgenden Beschreibung näher erläutert.

Es zeigen:
- Figur 1: einen schematischen Schnitt durch einen erfindungsgemäßen Radarsensor;
- Figur 2: ein Fahrzeug mit einem Radarsensor gemäß einem anderen Ausführungsbeispiel in der Draufsicht; und
- Figur 3: einen schematischen Schnitt durch den Radarsensor gemäß Figur 2.

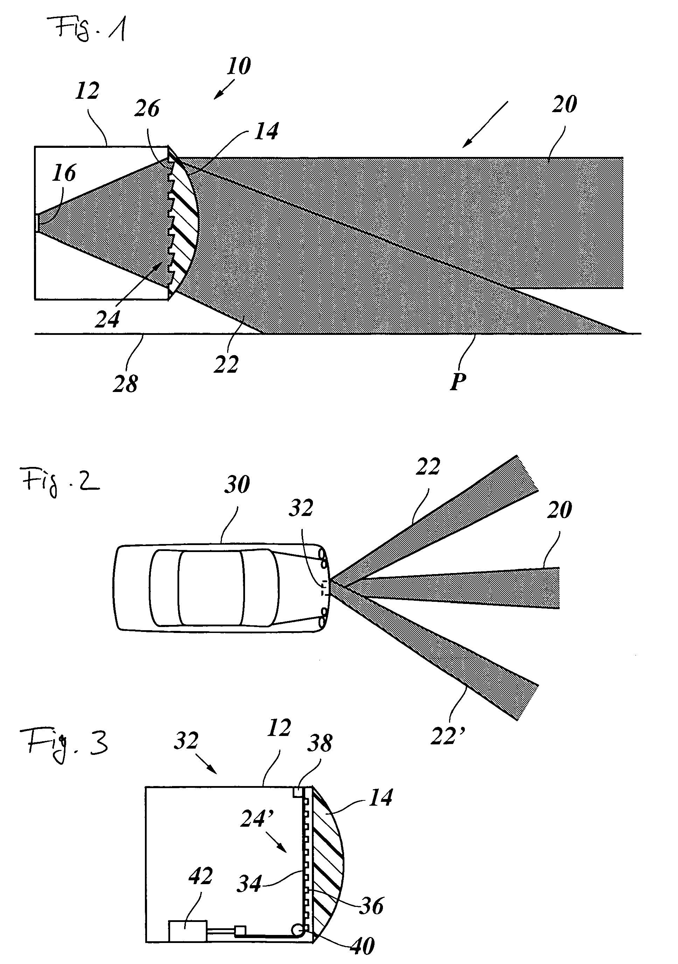

In Figur 1 ist ein Radarsensor 10, der beispielsweise vorn in einem Kraftfahrzeug eingebaut ist, schematisch in einem vertikalen Schnitt gezeigt. Ein Gehäuse 12 des Radarsensors ist am vorderen Ende durch eine plankonvexe Linse 14 abgeschlossen, die aus einem für mikrowellen transparenten Kunststoffmaterial mit einem geeigneten Brechungsindex besteht. Im Inneren des Gehäuses 12 sind etwa in der Brennebene der Linse 14 mehrere Antennenelemente 16, von denen in der Zeichnung nur eines zu erkennen ist, so nebeneinander angeordnet, daß sie in Verbindung mit der Linse 14 mehrere leicht gegeneinander winkelversetzte Radarstrahlen 18 erzeugen, die in einer senkrecht zur Zeichenebene in Figur 1 durch die optische Achse der Linse 14 gehenden waagerechten Ebene liegen. Durch Auswertung der Intensitäts- und Phasenunterschiede zwischen den von den verschiedenen Antennenelementen 16 empfangenen Radarechos läßt sich der Azimutwinkel der georteten Objekte bestimmen.

Auch der von einem einzelnen Antennenelement 16 erzeugte Radarstrahl 18 wird hier jedoch nochmals in zwei Teilstrahlen 20, 22 aufgeteilt, nämlich einen etwa waagerecht verlaufenden Hauptstrahl 20 und einen schräg auf die Fahrbahnoberfläche gerichteten Nebenstrahl 22. Diese Strahlaufteilung wird durch ein Beugungsgitter 24 erreicht, das im gezeigten Beispiel durch eine Folge von Nuten 26 in der planen Oberfläche der Linse 14 gebildet wird. Die Beugungswirkung kommt dadurch zustande, daß der leere Raum in den Nuten 26 eine geringere optische Dichte hat als die zwischen den Nuten stehengebliebenen Rippen aus dem Material der Linse 14, so daß Phasenunterschiede in der von dem Antennenelement 16 emittierten Strahlung hervorgerufen werden. Wahlweise könnten anstelle der Nuten 26 auch vorspringende Rippen oder in die Linse eingebettete Streifen aus einem Material mit einer von dem Material der Linse 14 abweichenden optischen Dichte verwendet werden. Im Prinzip wären auch Gitterstäbe aus einem für die Mikrowellenstrahlungung undurchlässigem Material denkbar, doch würde dies zu Verlusten in der Gesamtintensität des Radarstrahls 18 führen.

Der Winkel zwischen dem Hauptstrahl 20 und dem Nebenstrahl 22 ist abhängig von der Gitterkonstanten des Beugungsgitters 24, also vom Abstand zwischen den Nuten 26, und dieser Abstand liegt etwa in der Größenordnung der Wellenlänge der Mikrowellen, die beispielsweise bei einem 77 KHz-Radar etwa 3,9 mm beträgt.

Der Nebenstrahl 22 entspricht dem ersten Beugungsmaximum des Beugungsgitters 24. Im gezeigten Beispiel handelt es sich bei dem Beugungsgitter 24 um ein Transmissionsgitter, und zwar speziell um ein sogenanntes Blaze-Gitter, bei dem alle Beugungsmaxima mit Ausnahme des ersten Nebenmaximums auf einer Seite des Hauptmaximums unterdrückt sind. Wie aus der Theorie von Beugungsgittern (blazed gratings) bekannt ist, läßt sich dies dadurch erreichen, daß die Nuten 26 ein asymmetrisches Prismenprofil haben, das so auf die Gitterkonstante und den Brechungsindex des Materials abgestimmt ist, daß die unerwünschten Nebenmaxima durch destruktive Interferenz beseitigt werden. Somit konzentriert sich die gesamte Stahlungsenergie auf die beiden Teilstrahlen 20, 22.

Das Intensitätsverhältnis zwischen dem Hauptstrahl 20 und dem Nebenstrahl 22 ist vom Verhältnis zwischen der Breite der Nuten 26 und der Breite der zwischen den Nuten stehenden Rippen abhängig und läßt sich nach Bedarf einstellen.

Wahlweise könnte anstelle des in die Linse 14 integrierten Beugungsgitters 24 auch ein separates Beugungsgitter verwendet werden. Die in Figur 1 gezeigte Bauweise hat jedoch den Vorteil, daß sie eine einfache Herstellung und Montage erlaubt und sicherstellt, daß bei korrekter Justierung der Linse 14 zugleich auch das Beugungsgitter 24 korrekt justiert ist.

Der Nebenstrahl 22 läßt sich beispielsweise für eine direkte Messung der Geschwindigkeit des Fahrzeugs über Grund nutzen. Da der Auftreffpunkt des Nebenstrahls 22 auf die Fahrbahn 28 in einem relativ kurzen Abstand vor dem Fahrzeug liegt, erhält man ein hinreichend starkes Echo von Reflexionszentren P, die durch Oberflächenunebenheiten der Fahrbahn 28 gebildet werden. Die anhand des Doppler-Effekts feststellbare Relativgeschwindigkeit der Reflexionszentren P gibt unmittelbar die Eigengeschwindigkeit des Fahrzeugs an. Daneben ermöglicht es eine Messung des Abstands zwischen dem Radarsensor 10 und den Reflexionszentren P, also dem Auftreffpunkt Nebenstrahls 22 auf die Fahrbahn, die vertikale Justierung des Radarsensors 10 zu kontrollieren.

Weiterhin kann der Nebenstrahl 22 dazu benutzt werden, eine eventuelle Erblindung des Radarsensors 10 zu erkennen. Wenn beispielsweise die obere Hälfte der Linse 14 mit Schnee, Eis oder Matsch verkrustet ist und dadurch die Intensität des Hauptstrahls 20 so weit abgeschwächt wird, daß keine verläßliche Ortung von Hindernissen mehr möglich ist, so wird auch die Intensität des Nebenstrahls 22 in gleicher Weise abgeschwächt, und anhand Intensität des Echos von den Reflexionszentren P, das anhand des bekannten Abstands identifizierbar ist, läßt sich das Ausmaß der Erblindung feststellen, insbesondere auch dann, wenn vom Hauptstrahl 20 keine vorausfahrenden Fahrzeuge geortet werden.

Figur 2 zeigt den Grundriß eines Kraftfahrzeugs 30 mit einem Radarsensor 32, der nach dem gleichen Prinzip wie der Radarsensor 10 gemäß Figur 1 aufgebaut ist. Bei dem Radarsensor 32 ist das Beugungsgitter jedoch vertikal orientiert und symmetrisch aufgebaut und dabei so gestaltet, daß außer dem Hauptstrahl 20 zwei Nebenstrahlen 22, 22' erzeugt werden, die den beiden ersten Nebenmaxima entsprechen. Die Nebenstrahlen 22, 22' können hier beispielsweise zur Ortung von Objekten dienen, die sich im Nahbereich des Kraftfahrzeugs 30 links und rechts neben dem Fahrzeug befinden. Auf diese Wiese wird insbesondere eine Früherkennung von Einscherern ermöglicht.

Figur 3 zeigt einen denkbaren Aufbau des Radarsensors 32. Das Beugungsgitter 24' ist in diesem Fall getrennt von der Linse 14 ausgebildet und wird durch eine elastische Membran 34 gebildet, die mit einer Folge von Gitterstreifen 36 bestückt ist. Sowohl die Membran 34 als auch die Gitterstreifen 36 sind für die Mikrowellenstrahlung transparent, doch haben die Gitterstreifen 36 einen höheren Brechungsindex als Luft. Die Membran 34 ist an einem Ende fest in einen Halter 38 eingespannt und am anderen Ende durch eine Umlenkwalze 40 umgelenkt und an einem elektromechanischen Stellantrieb 42 befestigt. Mit Hilfe des Stellantriebes 42 läßt sich die Membran 34 dehnen, so daß sich der Abstand zwischen den Gitterstreifen und damit die Gitterkonstante vergrößert, mit der Folge, daß der Winkel zischen den Nebenstrahlen 22, 22' und dem Hauptstrahl 20 abnimmt. Auf diese Weise läßt sich der Abstrahlwinkel der Nebenstahlen 22, 22' während des Betriebs des Radarsensors stufenlos variieren.

Denkbar ist schließlich auch eine Kombination des vertikalen Gitters 24' nach Figur 3 mit dem horizontalen Gitter 24 nach Figur 1, so daß man zusätzlich zu dem Hauptstrahl 20 und den seitlichen Nebenstrahlen 22, 22' in Figur 2 noch jeweils einen schräg auf die Fahrbahn gerichteten Nebenstrahl erhält.

## Patentansprüche

1. Radarsensor für Kraftfahrzeuge (30), mit einer Optik (14), die eine Linse (14) aufweist, die einen von einem Antennenelement (16) erzeugten Radarstrahl (18) in mehrere in unterschiedliche Richtungen abgestrahlte Teilstrahlen (20, 22) aufteilt, **dadurch gekennzeichnet, daß** die Optik ein Beugungsgitter (24) aufweist, wobei das Beugungsgitter (24) ein als Blaze-Gitter ausgeprägtes Transmissionsgitter ist, das neben einem Hauptstrahl (20) nur einen einzigen Nebenstrahl (22) erzeugt und das Beugungsgitter (24) in Form von Nuten (26) mit asymmetrischem Prismenprofil in die Linse integriert ist, wobei zwischen den Nuten (26) Rippen aus dem Material der Linse (14) stehenbleiben und so das Intensitätsverhaltnis zwischen dem Hauptstrahl (20) und dem Nebenstrahl (22) vom Verhältnis zwischen der Breite der Nuten (26) und der Breite der zwischen den Nuten stehenden Rippen abhängig ist.

2. Radarsensor nach Anspruch 1, **dadurch gekennzeichnet, daß** das Beugungsgitter (24) horizontal orientiert ist, so daß der Nebenstrahl (22) schräg auf die Fahrbahn (28) gerichtet ist.

3. Radarsensor nach Anspruch 1, **dadurch gekennzeichnet, daß** ein weiteres Beugungsgitter (24') vertikal orientiert ist.

4. Radarsensor nach Anspruch 3, **dadurch gekennzeichnet, daß** das weitere Beugungsgitter (24') so gestaltet ist, daß es einen Hauptstrahl (20) und genau zwei symmetrisch zu dem Hauptstrahl liegende Nebenstrahlen (22, 22') erzeugt, so dass mittels der Nebenstrahlen eine Überwachung im Nahbereichs des Fahrzeugs beider Nebenspuren bzw. der linken Nebenspur und des rechten Fahrbahnrandes ermöglicht wird.

5. Radarsensor nach Anspruch 4, **gekennzeichnet durch** eine Stelleinrichtung (42) zum Variieren der Gitterkonstanten des weiteren Beugungsgitters (24').

6. Radarsensor nach Anspruch 5, **dadurch gekennzeichnet, daß** die stelleinrichtung (42) während des Betriebs des Radarsensors elektronisch ansteuerbar ist.

## Claims

1. Radar sensor for motor vehicles (30), comprising an optical system (14) which has a lens (14) which splits a radar beam (18) generated by an antenna element (16) into a plurality of partial beams (20, 22) emitted in different directions, **characterized in that** the optical system has a diffraction grating (24), the diffraction grating (24) being a transmission grating designed as blaze grating which, in addition to its main beam (20), generates only a single secondary beam (22), and the diffraction grating (24) being integrated in the lens in the form of grooves (26) with asymmetric prism profile, ribs of the material of the lens (14) remaining between the grooves (26), and the intensity ratio between the main beam (20) and the secondary beam (22) thus being dependent on the ratio between the width of the grooves (26) and the width of the ribs standing between the grooves.

2. Radar sensor according to Claim 1, **characterized in that** the diffraction grating (24) is horizontally orientated such that the secondary beam (22) is directed obliquely onto the roadway (28).

3. Radar sensor according to Claim 1, **characterized in that** a further diffraction grating (24') is vertically orientated.

4. Radar sensor according to Claim 3, **characterized in that** the further diffraction grating (24') is fashioned such that it generates a main beam (20) and precisely two secondary beams (22, 22') lying symmetrically in relation to the main beam, so as to enable the secondary beams to be used to monitor the two adjacent beams or the left-hand adjacent lane and the right-hand edge of the roadway in the close vicinity of the vehicle.

5. Radar sensor according to Claim 4, **characterized by** a control device (42) for varying the grating constant of the further diffraction grating (24').

6. Radar sensor according to Claim 5, **characterized in that** the control device (42) can be driven electronically during operation of the radar sensor.

## Revendications

1. Détecteur radar pour véhicules automobiles (30), doté d'une optique (14) qui présente une lentille (14) qui divise un faisceau radar (18) formé par un élément d'antenne (16) en plusieurs faisceaux partiels (20, 22) émis dans des directions différentes,
**caractérisé en ce que**
l'optique présente une grille de diffraction (24), la grille de diffraction (24) étant une grille de transmission gaufrée sous la forme d'une grille dite "blaze" qui, en plus d'un faisceau principal (20), produit un seul faisceau secondaire (22),
**en ce que** la grille de diffraction (24) qui présente la forme de rainures (26) profilées en prisme asymétrique est intégrée dans la lentille,
**en ce que** des nervures en le même matériau que la lentille restent entre les rainures (26) et
**en ce que** le rapport d'intensité entre le faisceau principal (20) et le faisceau secondaire (22) dépend du rapport entre la largeur des rainures (26) et la largeur des nervures situées entre les rainures.

2. Détecteur radar selon la revendication 1, **caractérisé en ce que** la grille de diffraction (24) est orientée à l'horizontale de telle sorte que le faisceau secondaire (22) soit orienté obliquement sur la chaussée (28).

3. Détecteur radar selon la revendication 1, **caractérisé en ce qu'**une autre grille de diffraction (24') est orientée à la verticale.

4. Détecteur radar selon la revendication 3, **caractérisé en ce que** l'autre grille de diffraction (24') est configurée de telle sorte qu'elle forme un faisceau principal (20) et exactement deux faisceaux secondaires (22, 22') situés symétriquement par rapport au faisceau principal de telle sorte que les faisceaux secondaires permettent une surveillance de la proximité du véhicule sur les deux bandes latérales ou sur la bande latérale gauche et le bord droit de la chaussée.

5. Détecteur radar selon la revendication 4, **caractérisé par** un dispositif d'ajustement (42) qui fait varier la constante de grille de l'autre grille de diffraction (24').

6. Détecteur radar selon la revendication 5, **caractérisé en ce que** le dispositif d'ajustement (42) peut être commandé par des moyens électroniques lorsque le détecteur radar est en fonctionnement.
